# EUROPEAN PATENT SPECIFICATION

(11) **EP 2 568 382 B1**
(45) Date of publication and mention of the grant of the patent: **01.04.2020**
(21) Application number: 11180799.6
(22) Date of filing: 09.09.2011
(51) Int. Cl.: H04L 12/24, G06F 9/54, H04L 29/08

(54) **Optimizing of publish-subscribe interprocess communications through the use of content-filters**
Optimierung von interprozessualer Kommunikation von publish-subscribe Systemen durch den Einsatz von Inhaltsfiltern
Optimisation de communications interprocessus des systèmes de publication-abonnement par l'utilisation de filtres de contenu

(43) Date of publication of application: 13.03.2013
(73) Proprietor: BlackBerry Limited, Waterloo, ON N2K 0A7 (CA)
(72) Inventor: Fidler, Eli Joshua, Toronto, Ontario M4P 3A2 (CA); Tapuska, David Francis, Waterloo, Ontario N2L 5Z5 (CA)
(74) Representative: Vigand, Philippe

(56) References cited:
- EP-A1- 2 222 057
- WO-A1-00/39673
- US-A1- 2006 031 572
- US-B1- 6 829 770
- US-B1- 6 859 829

## Description

### BACKGROUND

### 1. Technical Field.

This disclosure relates to a publish-subscribe communication system.

### 2. Related Art.

A publish-subscribe system may allow publishers to publish events associated with objects that may be distributed to many recipients known as subscribers. Subscribers utilizing one or more objects may be programmedto receive publish events by subscribing to specific objects, with or without knowledge of the publishers.

In some systems, a subscribing process mayonly use specific information from a publishing process. To locate this specific information in the published events, the subscribing process may wake-up each time an event is published and evaluate the published event. If the published event does not contain useful information, the subscribing process may sleep until the next event is published - at which time the subscribing process will re-awaken and evaluate that published event for useful information. Document US 6 859 829 B1 (PARUPUDI GOPAL [US] ET AL) 22 February 2005 from Microsoft, discloses a publish-subscribe service provided as an extension to COM based Windows OS in a multi-threading context. Said system allows registered COM+ based application subscribers to receive filtered event notifications from COM+ based application publishers through the SENS mechanism. The SENSE mechanism is a service extension of said OS where subscribers are client applications which subscribe to event(s) of publisher applications accessible through the SENS OS service. Said subscribers register to said event, specifying their subscription through a registration mechanism involving a filter mechanism using available methods/API. A message indicates the event which is defined as an event class object, an OS COM+ object. A running subscriber application, this is an application thread/process, is notified upon an event where said event corresponds to a change in the value of the corresponding COM+ object attribute. SENS is a central SENS mechanism which limits event notifications and reduces OS resource consumption.

Document US 6 829 770 B1 (HINSON GERALD L [US] ET AL) 7 December 2004 (2004-12-07), from Microsoft, cited in the previous document, is in the same context and specifies further the form of the publisher filter and of the event filtering mechanism.

Document US 2006/031572 A1 (FEUERSTEIN YEHUDA [US] ET AL) 9 February 2006 (2006-02-09), from Microsoft, discloses a publish-subscribe mechanism defining event notification and event filtering involving a broker in a DLL context.

Document EP 2 222 057 A1 (RESEARCH IN MOTION LTD [CA]) 25 August 2010 (2010-08-25), from the applicant, discloses a publish-subscribe system, allowing the specification of content-filter message conditions as global time based conditions. Such specifications allow the system to bind the evaluation a content filter message condition to the specified time period.

Document WO 00/39673 A1 (COMPUTER ASS THINK INC [US]) 6 July 2000 (2000-07-06) disclose a publish-subscribe mechanism in the context of Unix and SQL, allowing subscriptions with event filtering specifications.

### BRIEF DESCRIPTION OF THE DRAWINGS

The system may be better understood with reference to the following drawings and description. The components in the figures are not necessarily to scale, emphasis instead being placed upon illustrating the principles of the disclosure. Moreover, in the figures, like referenced numerals designate corresponding parts throughout the different views.
Figure 1 is an example of a layout of a computer architecture that may execute a publish-subscribe system.
Figure 2 is an example of a publish-subscribe system.
Figure 3 is an example of a publish-subscribe file.
Figure 4 is an example of a data structure retaining content-filter data received from subscribing processes.
Figure 5 is an example of a publish-subscribe content-filtering process.
Figure 6 is an example of a second publish-subscribe content-filtering process.

### DETAILED DESCRIPTION OF THE DRAWINGS

A content-filter publish-subscribe system allows a publish-subscribe engine to determine whether a notification event should be distributed to subscribing processes, and where appropriate causes such notification event to be distributed. By enabling the publish-subscribe engine to evaluate whether an object's attribute value satisfies a content-filter condition received from a subscribing process, the publish-subscribe system may reduce the load on an operating system and associated processors, and reduce the number of notification events that are distributed to subscribing processes. The system allows for optimized interprocess communication, and thus a more efficient operating system.

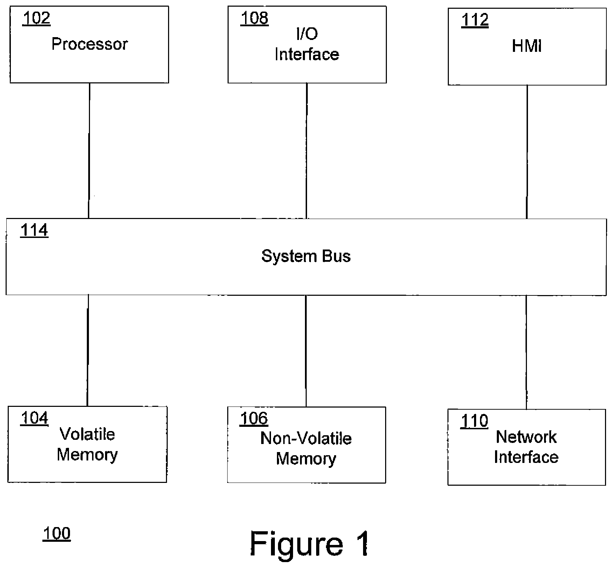

Figure 1 is a computer architecture layout that may execute a publish-subscribe system 100. The architecture 100 comprises one or more processors 102, volatile memory 104, non-volatile memory 106, and one or more input/output (I/O) interfaces 108, an optional network interface 110, an optional human-machine interface (HMI) 112, and a system bus 114. The volatile memory 104 may include random access memory (RAM). The non-volatile memory 106 may include a hard disk drive (HDD) or a flash memory device. The system bus 114facilitates interprocess communications and other types of communications and interoperations between the various components 102, 104, 106, 108, 110, and 112 of the architecture 100 through a tangible or wireless medium.

One or more processors 102 may execute an operating system, application programs, or both. The processors 102 may be central processing units, or may be a dedicated processor that is controlled by a central processing unit (*e.g*., a slave processor). The processors 102 may perform specialized tasks such as providing rapid access to published media, freeing up other processors like a front-end processor that may be dedicated entirely to processing transmitted information, error detection and control, receipt, transmission, and encoding; and the management of static or dynamic links to and from electronic devices. Some processorsl02 may be programed to function as a publish-subscribe engine that passes interprocess communications between one or more subscribing and publishing processes. Software programs that contain the programing data to control the processor 102 may be stored in an executable form accessible from either the volatile memory 104 or the non-volatile memory 106.

The interprocess communications may comprise events or messages that may be passed throughout the system 100 and may be transmitted in one or more packets of bytes. The data in these communications may have exclusive meaning to the sending process and the receiving process, but not to other processes. When the interprocess communications includes a content-filter condition and is sent by a subscribing process, the interprocess communication may also have meaning to the publish-subscribe engine.

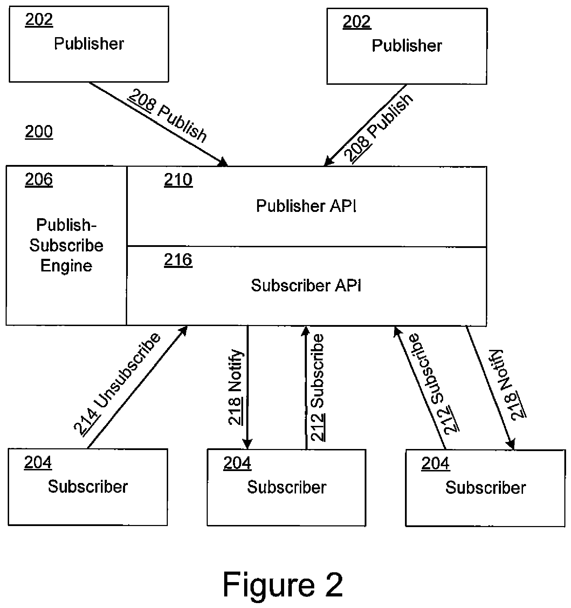

Figure 2 is a publish-subscribe system 200. The publishers 202 and the subscribers 204 may be coupled with or without knowledge of the other. In the publish-subscribe system of Figure 2, a publish-subscribe engine 206 may provide a store-and-forward functionality to route data bearing events between a publisher 202 and a subscriber 204. Publishers 202 may publish events 208 to the publish-subscribe engine 206 through a publish application program interface 210. Subscribers 204 may transmit subscribe 212 and unsubscribe 214 events through a subscribe application program interface 216. Notify events 218 may inform subscribers 204 that an object's attribute value has changed. In some systems, published events 208 may not be persisted and will be lost to a system restart or a failure of the publish-subscribe system 200.

The publish-subscribe engine 206 may provide functionality (*e.g*., procedure calls) that may include for example, open ( ), write ( ), read ( ), and close ( ) that may be invoked by processors and applications (*e.g*., publishers 202 and subscribers 204). The syntax or protocol that may be used to make these calls or others functions may require more or less call detail, may or may not include the data or storage location that may drive them, may have different semantics, syntax, or forms. The syntax or protocol may depend upon the programming language or interface specification that is used with the may require more or less call detail, may or may not include the data or storage location that may drive them, may have different semantics, syntax, or forms. The syntax or protocol may depend upon the programming language or interface specification that is used with the operating system. For example, some publish-subscribe systems 200 are compatible with a programming interface standard adopted by the Institute of Electrical and Electronic Engineers (IEEE), such as the IEEE Portable Operating System Interface (POSIX) 1003.1 specification. Other examples of programming interfaces that may be used with publish-subscribe systems 200 may be those that are compatible with operating specifications such as LINUX or QNX Neutrino.

In some systems, the publish-subscribe engine 206 may provide functionality that may include publish ( ), subscribe ( ), unsubscribe ( ), and notify ( ) that may be invoked by processors and applications (*e.g*., publishers 202 and subscribers 204). The syntax or protocol that may be used to make these calls or other functions may require more or less call detail, may or may not include the data or storage location that may drive them, may have different semantics, syntax, or forms. The syntax or protocol may depend upon the programming language or interface specification used with the operating system. In yet other systems, a combination of some or all of the above function calls or other function calls may be used to communicate interprocess communications.

System content may reside in directories or files resident to a local or distributed memory. Files may be associated with a directory through pointers, a hierarchical structure, or other organizational structures. Each directory and file may have a corresponding directory or file name. The contents of a directory or file may represent an object in the publish-subscribe system 200.

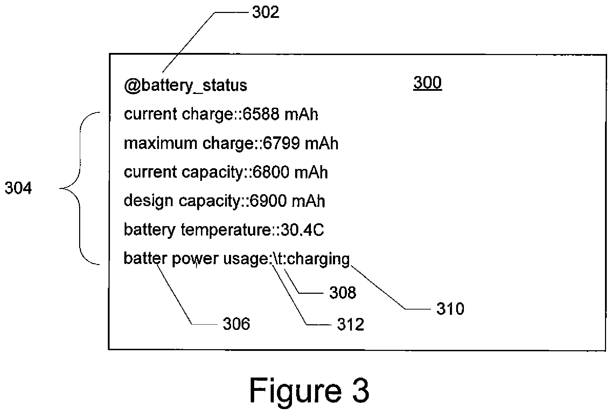

Figure 3 is an example of a publish-subscribe file 300. Each publish-subscribe file may include an object identifier 302 which may comprise meta data such as the file name (*e.g*., battery_status). In some systems, the object identifier 302 may be preceded by a special character to denote the file name. In Figure 3, the character denoting the file name is the "@" character; however, other characters may be used. When the publish-subscribe file contains file attributes 304, the attributes 304 may follow the file name 302. Each attribute 304 may comprise a tag, an encoding type, and a value value for the attribute (*e.g*., 6588 mAh). The value 310 may be, for example a sequence of characters excluding a linefeed character or a null character. The encoding type may, for example, be based on specific encoding types of a programming language, such as C programming escape sequences (*e.g*., \n, \t), Base 64 encoding sequences, or other encoding sequences. The tag 306, the encoding type 308, and the value 310 may be separated by a separator character 312, such as a colon (*e.g*., current charge:\t:\6588 mAh). When the encoding type 308 is not provided (*e.g*., current charge::6588 mAh), a default coding type may be used. Successive attributes 304 may, for example, be separated by control code or control characters such as linefeed characters that instruct the processor to perform a control function. In an alternative system, each attribute 304 may comprise a tag 306 and a value 310 separated by a separator character 312 without an encoding type. While the contents of the publish-subscribe file 300 are shown in Figure 3 in human readable format, an alternative publish-subscribe file format may be in a non-human readable format, such as a machine readable format.

One or more subscriber applications204 may invoke functions through the subscriber application programing interface 216 to subscribe to one or more objects to receive publish events associated with the objects. For example, a subscribing process 204 may subscribe to an object by opening the corresponding publish-subscribe file with an open ( ) or a subscribe ( ) call. When subscribing to an object, a subscribing process 204 may include open or subscribe options as part of the subscription initiation. These options may be added to the file name or path name of the subscribed to object. In some systems, these options may be added as suffixes to the file name or path name of the subscribed to object. In other systems, these options may be a prefix to the file name or path name of the subscribed to object. In some systems, the open or subscribe option may be separated from the file or path name by an open or subscribe option special character, such as a "?" character. Multiple open or subscribe options may be separated from one another by additional open or subscribe option special characters (*e.g*., open (battery_status?delta?content=current capacity<339.95 mAh); subscribe (battery_status?delta?content=current capacity<339.95 mAh)).

At the time of subscription, a subscribing process 204 may specify a publish-subscribe engine content-filter that may be evaluated by the publish-subscribe engine 206. Each content-filter may identify one or more object attributes 304 and a condition, test, or algorithm that is related to the identified object attribute(s) 304. As the publish-subscribe engine 206 receives publication event(s) 208 from publishers 202, the publish-subscribe engine 206 will evaluate the publication event 208 against any received content-filters that are associated with the content of the received publication event. The evaluation is based on the specified condition, test, or algorithm, and may include performing one or more algorithms, evaluating one or more Boolean functions, evaluating a collection of quantitative data to determine the likelihood that an event will or will not occur, determining the presence or non-presence or a particular object attribute 304 within a publish-subscribe file 300, or performing other analyses on data accessible to the system either locally or through distributed connections. In some systems, when the publish-subscribe engine 206 determines that the condition, test, or algorithm specified by the evaluated content-filter is satisfied (*e.g*., true or valid) or occurs, the publish-subscribe engine 206 causes the transmission of a notification event 218 to a process or destination (*e.g.,* a node) that subscribed 204 with the specified content-filter. The transmitted notification event 218 is received by the subscribing process 204 or destination and informs the process or destination that the subscribed to object has changed. When the publish-subscribe engine 206 determines that the result of the condition, test, or algorithm specified by the evaluated content-filter is not satisfied (*e.g*., not true or invalid) or does not occur, no notification event 218 is transmitted to the subscribing process 204.

Where multiple processes subscribe to the same object with different content-filters, a single change in an object's attribute may result in the publish-subscribe engine 206 transmitting a notification event 218 to certain subscribing processes 204 while not transmitting a notification event to other subscribing processes 204. Where multiple processes subscribe to the same object with identical content-filters, a single change in an object's attribute may result in the publish-subscribe engine 206 transmitting a notification even 218 to each of the processes that subscribed with that particular content-filter.

The content-filter may comprise a content-filter indicator (*e.g*., content=), an object attribute tag 306 (*e.g.,* current capacity), and a value condition (*e.g.,* <399.95 mAh). The value condition may comprise a Boolean test condition (*e.g*., =, <, >, <=, >=, !=, equals, not equal to, greater than, greater than or equal to, less than, less than or equal to, in, not in, between, contains, does not contain, begins with, does not begin with, ends with, does not end with, is null, is not null, etc.) and a value. In some systems, the value condition may indicate the presence or non-presence of a particular object attribute. In other systems, the value condition may invoke a separate function call that returns the result of an algorithm. In yet other systems, the value condition may include an alias that designates a condition (*e.g*., "low capacity") instead of an actual value. Use of an alias may further optimize interprocess communications because it permits a global system changeto modify multiple content-filter conditions instead of multiple subscribing processes having to re-subscribe with a new content-filter condition. For example, some systems may consider a "low battery capacity" to be a capacity below 5%. Multiple processes subscribing to this object attribute could do so by each invoking an open (battery_status?content=current capacity<339.95 mAh) call. If it was determined that instead of 5% the "low battery capacity" threshold should instead be 7%, each process that invokes the previous open ( ) or subscribe ( ) call would have to first clear its content-filter and then re-subscribe with an open (battery_status?content=current capacity<475.93 mAh) call. As an alternative, use of a content-filter alias condition simplifies the process. An alias content-filter condition for low battery capacity may be, open (battery_status?content=current capacity<"low capacity"). This content-filter could then be changed by updating the value associated with the "low capacity" alias. Updating the alias value would update all of the content-filters utilizing this alias. A data structure in the volatile memory 104 or the non-volatile memory 106 may retain the content-filter aliases. Content-filter aliases may be enclosed within special characters. In some systems, these special characters may be the quotation marks.

In some publish-subscribe systems 200, a subscribing process 204 may, at subscription initiation or another time, identify a number of times that a content-filter is to be evaluated or applied. The number of content-filter applications may be appended to the content file and designated by a special character. In some systems, this special character may be the "#" character (*e.g*., open (battery_status?content-current capacity<339.95 mAh#7)). In systems where a content-filter application number is provided, the application number may be parsed from the content filter and retained in a data structure in either the volatile 104 or non-volatile memory 106. Each time the publish-subscribe engine issues a notification event 218 to the subscribing process 204, the publish-subscribe engine may decrement (or increment) the application number by a predetermined amount. When the application number reaches a threshold or zero, the publish-subscribe system may issue a command causing the content-filter not to be evaluated or alternatively to be deleted from its retained location. Some systems may default to decrementing (or incrementing) the application number by a unit value (*e.g.,* one) upon the issuance of each notification event 218.

When an application number is not provided as part of the subscription message, the system may default to always apply the content-filter until instructed by the subscribing process 204 to suspend or delete the content-filter. A content filter may be suspended or deleted by issuing a subscription message with a content filter that comprises an object attribute tag 306 without a value condition (*e.g*., open (battery_status?content-current capacity)). Receipt of a content filter without a value condition may cause the publish-subscribe engine to purge any content-filters that are associated with the identified object attribute tag 306. Content-filters that have a limited number of applications may be suspended or deleted before the expiration of all of the filter applications by issuing a subscription message without a value condition.

The content filter tag and value condition may be received by the subscriber application program interface 216 and passed to the publish-subscribe engine 206. The publish-subscribe engine 206 may parse the content-filter data and cause the content filter to be retained in a memory or a data structure. In some systems, the content-filter may be retained in a multidimensional data structure. The multidimensional data structure may be accessed by multiple index variables.

A subscribing process 204 may subscribe to an object and then go to a temporary state of suspension (*e.g*., sleep) until the object is changed by invoking a "wait" open option. In a "wait" configuration, the subscribing process 204 may quickly resume operations in response to a wake-up message received from the publish-subscribe engine 206. In some systems, the wake-up message may comprise a notification event 218 that includes a small amount of data that operates like an "on" switch, and informs the subscribing process 204 that the object has changed. In other systems, the notification event 218 may comprise the subscribed to object name 302. In other systems, the notification event 218 may take the form of a pulse, a signal, or a semaphore as described in an operating system's specifications, such as POSIX, LINUX, or QNX Neutrino. In some systems, in response to a notification event 218 a read () call may return to the subscribing process the changed object or changed object attribute data. When the "wait" open or subscribe option is implemented in connection with a content-filter, the read ( ) call will only return data when the evaluation of the specified content-filter results in a content-filter being satisfied or occurring. The output of the read ( ) call will depend on the type of subscription mode that was invoked. Alternatively, a notification event 218 may provide data to the subscribing process, without the subscribing process performing a read ( ) call, when the evaluation of the specified content-filter results in a content-filter being satisfied or occurring. The amount of data, type of data, or both, provided with the notification event 218 may depend on the type of subscription mode that was invoked. Allowing the subscribing processes to remain in a sleep state until a message satisfying its specified content-filter requirements reduces the messaging load on the computer system and its associated processor(s).

In some systems, a subscribing process 204 may subscribe to an object in either a full mode, a delta mode, or in full and delta mode at the same time. In some systems, unless a mode is specified, subscriptions may default to full mode. When subscribing in a full mode, in response to a read ( ) function the subscriber 204 may receive a single consistent version of the contents (*e.g*., identifier 302 and attributes 304) of the object as it exists at the moment when it is requested. When a publisher 202 changes an object several times before a subscriber 204 requests the object, the subscriber 204 may receive the current state of the publish-subscribe file 300 content at the time of the request. Subsequent changes to the object may result in additional notification events 218 being transmitted to the subscriber 204, thereby allowing the subscribe to invoke additional read ( ) functions. When subscribing in a delta mode, a subscriber 204 that invokes a read ( ) function may only receive an object's attributes that have changed. Each subsequent change to the object's attributes results in a new published event 208 pertaining to the attribute that has changed. When multiple subscribers 204 open the same object in delta mode, each subscriber 204 may receive its own notification event 218 regarding changes to an object's attributes. Regardless of whether a subscribing process 204 utilizes the full or delta mode open option, any content filter included as part of the subscription message will first be applied by the publish-subscribe engine 206 in order to determine if a notification event 218 should be issued to the subscribing process 204.A subscribing process 204 may generate an unsubscribe event 214 by invoking a close ( ) function.

Any publisher 202 may invoke functions, or functions in the operating system, to cause the creation of an object when the object did not previously exist, or to cause the generation of a publish event 208 associated with an object. A publisher 202 may prepare to publish an object by invoking an open ( ) call. Where a publish-subscribe file 300 is opened that did not already exist, the file may be created with an object name 302 but without any attributes 304. Attributes may be added to the publish-subscribe file 300 when a publisher 202 invokes a write ( ) function in the application programming interface. When a new attribute is included in the write ( ) function, the attribute will be added to the publish-subscribe file 300. When an existing attribute is include in the write ( ) function, the attribute may be modified in the publish-subscribe file 300. Arguments provided by a publisher 202 in connection with an open ( ) function may include any of an object name, a pathname, a file name, or an access mode.

After a publisher 202 has prepared to publish an object by opening the associated publish-subscribe file, the publisher 202 may publish events associated with the object by invoking the write ( ) function. In addition to adding new attributes to a publish-subscribe file through the write ( ) function, the write ( ) function may also be invoked to delete individual attributes of a publish-subscribe file. The write ( ) function may also invoke a truncate mode that purges all of the attributes from a publish-subscribe file.

Multiple publishers 202 may open and write (*e.g*., publish) to the same object. Different publishers 202 may write to different attributes of the same object. Alternatively, different publishers 202 may write to the same attribute of an object. When a publisher 202 writes to a subset of an object's attributes, the other remaining attributes are not affected.

In other systems, a subscribing process 204 may subscribe to an object in either a full mode, a delta mode, or in full and delta mode at the same time, by invoking a subscribe ( ) call. When subscribing in a full mode, in response to a notification event 218 the subscriber 204 may receive a single consistent version of the contents (*e.g*., identifier 302 and attributes 304) of the object as it exists at the moment when it is requested. Subsequent changes to the object may result in additional notification events 218 being transmitted to the subscriber 204. When subscribing in a delta mode, a subscriber 204 that receives a notification event 218 that may only provide an object's attributes that have changed. Each subsequent change to the object's attributes results in a new notification event 218 pertaining to the attribute that has changed. When multiple subscribers 204 open the same object in delta mode, each subscriber 204 may receive its own notification event 218 regarding changes to an object's attributes. Regardless of whether a subscribing process 204 utilizes the full or delta mode open or subscribe option, any content filter included as part of the subscription message will first be applied by the publish-subscribe engine 206 in order to determine if a notification event 218 should be issued to the subscribing process 204. A subscribing process 204 may generate an unsubscribe event 214 by invoking an unsubscribe ( ) function.

Any publisher 202 may invoke functions, or functions in the operating system, to cause the creation of an object when the object did not previously exist, or to cause the generation of a publish event 208 associated with an object. A publisher 202 may publish an object by invoking a publish ( ) call. Where a publish-subscribe file 300 is published when that file did not already exist, the file may be created with an object name 302 but without any attributes 304. Attributes may be added to the publish-subscribe file 300 when a publisher 202 invokes the publish ( ) function in the application programming interface. When a new attribute is included in the publish ( ) function, the attribute will be added to the publish-subscribe file 300. When an existing attribute is include in the publish ( ) function, the attribute may be modified in the publish-subscribe file 300. Arguments provided by a publisher 202 in connection with a publish ( ) function may include any of an object name, a pathname, a file name, or an access mode.

In addition to adding new attributes to a publish-subscribe file 300 through the publish ( ) function, the publish ( ) function may also be invoked to delete individual attributes of a publish-subscribe file. The publish ( ) function may also invoke a truncate mode that purges all of the attributes from a publish-subscribe file.

Multiple publishers 202 may publish to the same object. Different publishers 202 may publish different attributes of the same object. Alternatively, different publishers 202 may publish the same attribute of an object. When a publisher 202 publishes a subset of an object's attributes, the other remaining attributes are not affected.

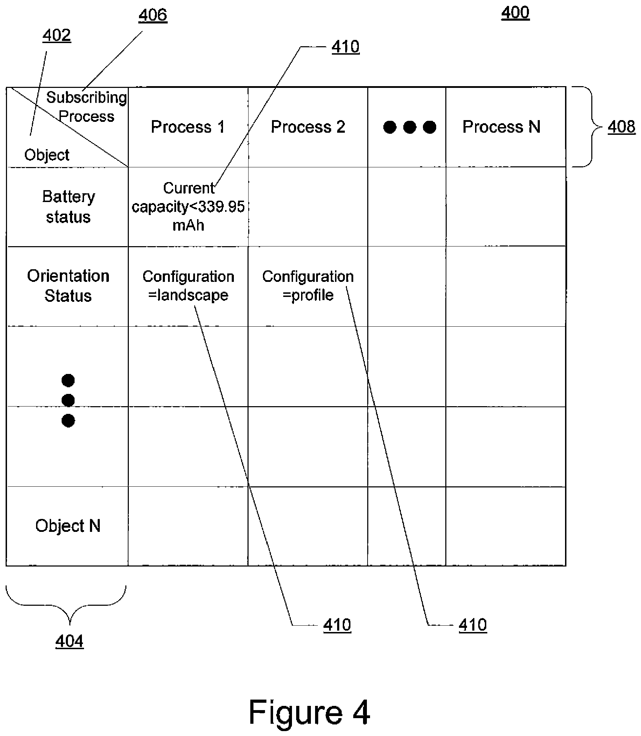

Figure 4 is an example of a data structure 400 retaining content-filter data received from subscribing processes. The data structure may be a multidimensional data structure whose data may be referenced by a first index variable and a second index variable. The first index variable402 may reference an object or an object attribute. In Figure 4, the first column 404 of the data structure 400 may comprise one or more first index variables 402. The second index variable 406 may reference a subscribing process. Although the first index variable and the second index variable are described with reference to Figure 4 as being associated with a particular row and column, it is to be understood that the explanation of Figure 4 is only an example and is not intended to be limiting. The first row 408 of the data structure 400 may comprise one or more second index variables 406. Content-filter data (*e.g.,* 410) may be accessed by reference to the first and second index variables. Multiple content-filters for a single object or object attribute may be organized under a common index variable. For example, all of the content-filters directed to a battery's current charge may be organized in a similar row of the data structure 400. This common organization may increase the efficiency for evaluation of a publication event received that includes a specific object attribute, such as change to a battery's current charge. The publish-subscribe engine 206 may identify the location of the object attribute (*e.g*., current charge) in the data structure 400, and by stepping through the associated content-filters quickly determine which subscribing processes should receive a notification event 218.In some systems, the data structure 400 retaining the content-filter data may be organized to reference additional data structures. In these systems, the additional data structures may reference further information about a content-filter, such as how many times the content-filter is to be applied.

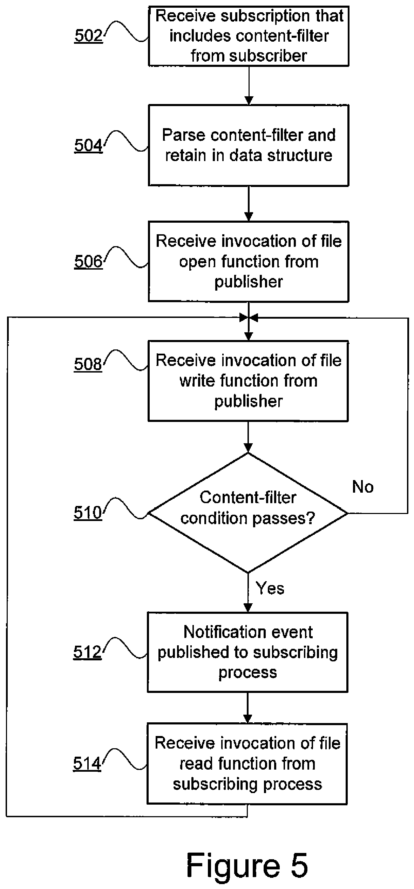

Figure 5 is an example of a publish-subscribe content-filtering process. At 502 the publish-subscribe engine 206 receives a subscription initiation event 212 from a subscribing process 204 that includes a content-filter. To initiate the subscription event, the subscribing process 204 invokes an open ( ) function for a publish-subscribe file 300 which specifies a content-filter (*e*.*g*., 410). The subscription may include additional options for subscribing to the object, such as the mode in which publication events are to be distributed to the subscribing process 204, whether the subscribing process 204 will transition to a sleep state after issuance of the subscription message, or other supported options.

At 504 the publish-subscribe engine 206 parses the content-filter data and causes it to be retained in a data structure. While retained in the data structure, the content-filter remains associated with the subscribing process 204, such that the publish-subscribe engine 206 may identify which subscribing process 204 should receive a notification when the content-filter is satisfied or occurs.

At 506 the publish-subscribe engine 206 receives an open ( ) function for a publish-subscribe file 300 from a publisher 202. The open ( ) function may include the name of a publish-subscribe file 302 or object attribute 304 for which a subscribing process 204 has subscribed with a content-filter.

At 508 an invocation of the write ( ) function is received from the publisher 202 for one or more of the object attributes that are associated with a publish-subscribe file 300 that was opened by the publisher 202. The write ( ) function may add, change, or delete one or more of the object attributes 304 for the publish-subscribe file 300.

At 510 the publish-subscribe engine 206 evaluates the added, changed, or deleted object attribute against any corresponding content-filters associated with this object attribute. The evaluation may comprise comparing the current state or value of the object attribute with a threshold state or value. Alternatively, the evaluation may comprise comparing the current state of the object attribute with the state or value of another object attribute. If upon evaluation of the content-filter, it is determined that the content-filter is not satisfied or did not occur, the publish-subscribe engine 206 will not transmit a notification event 218 with respect to this evaluated content-filter. If upon evaluation of the content-filter it is determined that the content-filter is satisfied or occurred, the publish-subscribe engine 206 will transmit a notification event 218 to the subscribing process 204.

At 512 a notification event 218 is transmitted to the subscribing process 204 in response to its subscription event and content-filter. The notification event 218 may operate as a wake-up message for the subscribing process 204. In some systems, the notification event 218 may comprise the object name or the object attribute that relates to the content-filter, or both.

At 514 one or more invocations of the read ( ) function may be responsive to the notification event 218 transmitted at 512. Depending on a type of subscription mode that may have been specified at 502, the read ( ) function may return the entire contents of the publish-subscribe file 300 associated with the content-filtered object attribute, only the changed value of the content-filtered object attribute, or both. Steps 508, 510, 512, and 514 may be repeated for subsequent invocations of the write ( ) function by the publisher 202.

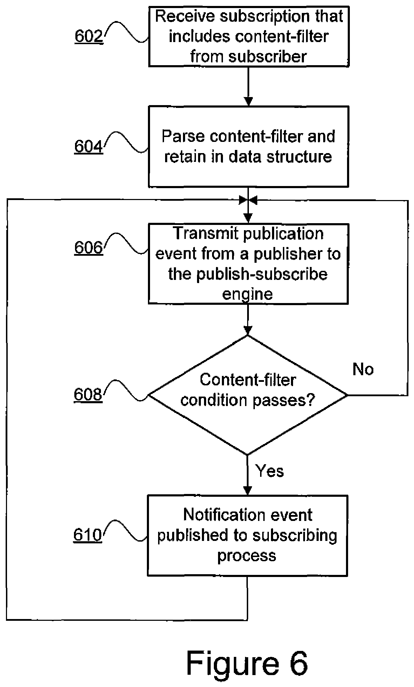

Figure 6 is a second example of a publish-subscribe content-filtering process. At 602 the publish-subscribe engine 206 receives a subscription event 212 from a subscribing process 204 that includes a content-filter. To initiate the subscription event, the subscribing process 204 invokes a subscribe ( ) function for a publish-subscribe object which specifies a content-filter (*e.g*., 410). The subscribe ( ) function may provide information to the publish-subscribe engine 206 indicating the objects to which the subscribing process 204 is subscribing. The subscription may include additional options for subscribing to the object, such as the mode in which publication events are to be distributed to the subscribing process 204, whether the subscribing process 204 will transition to a sleep state after issuance of the subscription event, or other supported options.

At 604 the publish-subscribe engine 206 parses the content-filter data and causes it to be retained in a data structure. While retained in the data structure, the content-filter remains associated with the subscribing process 204, such that the publish-subscribe engine 206 may identify which subscribing process 204 should receive a notification when the content-filter is satisfied or occurred.

At 606 the publish-subscribe engine 206 receives a publication event in response to a publisher 202 invoking a publish ( ) call. The publication event may include the name of a publish-subscribe object or object attribute 304 for which a subscribing process 204 has subscribed with a content-filter. The publication event may indicate the change to the one or more attribute values.

At 608 the publish-subscribe engine 206 evaluates the added, changed, or deleted object attribute against any corresponding content-filters associated with this object attribute. The evaluation may comprise comparing the current state or value of the object attribute with a threshold state or value. Alternatively, the evaluation may comprise comparing the current state of the object attribute with the state or value of another object attribute. If upon evaluation of the content-filter it is determined that the content-filter is not satisfied or did not occur, the publish-subscribe engine 206 will not transmit a notification event 218 with respect to this evaluated content-filter. If upon evaluation of the content-filter it is determined that the content-filter is satisfied or occurred, the publish-subscribe engine 206 will transmit a notification event 218 to the subscribing process 204.

At 610 a notification event 218 is transmitted to the subscribing process 204 in response to its subscription event and content-filter. The notification event 218 may operate as a wake-up message for the subscribing process 204. In some systems, the notification event 218 may comprise the object name or the object attribute that relates to the content-filter, or both. One or more notification events 218 may be responsive to subsequent publication events that satisfy the content-filter. These notification events 218 may be transmitted to the subscribing process without the subscribing process requesting the notification events 218. Depending on a type of subscription mode that may have been specified at 602, a resulting notification event 218 may return all of the other attributes associated with the object attribute that was the subject of the content-filter, a portion of the other attributes associated with the object attribute that was the subject of the content-filter, or only the changed value of the object attribute that was the subject of the content-filter.

A unit of persistence that may be used in connection with the publish-subscribe system may be a publish-subscribe directory or subdirectory. Saving the organizational structure of the publish-subscribe file system in a local or distributed memory may ensure that objects that contain related or liked data are self-consistent. In some systems, only the current state of an object may be saved to a persistent memory. For files that are open in the delta mode, the queue of changes (*e.g*., deltas) may be lost and only the current state of the contents of the object may be saved when they are saved to persistent memory. When the publish-subscribe directory is restored from the save file (*e.g.,* at startup), each of the objects contained in the publish-subscribe directory may be recreated in a volatile or non-volatile storage space. Alternatively, the minimum unit of persistence may be all of the directories, subdirectories, and objects under a publish-subscribe mount point. In a further alternative, the minimum unit of persistence may be individual publish-subscribe files (*e.g*., objects) that may each be written to a persistent storage in a separate operation. On startup, the publish-subscribe system may restore all publish-subscribe files from the persistent storage to a volatile or non-volatile storage space immediately or alternatively each object may be restored when it is first accessed. (*e.g.,* at startup), each of the objects contained in the publish-subscribe directory may be recreated in a volatile or non-volatile storage space. Alternatively, the minimum unit of persistence may be all of the directories, subdirectories, and objects under a publish-subscribe mount point. In a further alternative, the minimum unit of persistence may be individual publish-subscribe files (*e.g.,* objects) that may each be written to a persistent storage in a separate operation. On startup, the publish-subscribe system may restore all publish-subscribe files from the persistent storage to a volatile or non-volatile storage space immediately or alternatively each object may be restored when it is first accessed.

Other examples of systems and methods may include combinations of some or all of the structure and functions described or shown in one or more of each of the figures. These systems or methods may be formed from any combination of structure and functions described or illustrated in the figures. Moreover, some or all of the functions or acts may occur in real time (*e.g*., processing information at the same rate it is received; the actual time a processor requires to process the information). Some alternative systems and methods may operate in connection with a distributed network.

A further example is a computer programmed to service publish-subscribe interprocess communications, comprising a processor programmed to operate as a publish-subscribe engine to receive from a subscribing process a content-filter message; a multidimensional data structure configured to retain the content-filter message by reference to a first index variable and a second index variable; the content filter message comprising an object attribute associated with a publish-subscribe object and an evaluatable condition associated with the object attribute, the content-filter message defining when the subscribing process is notified about a change to the object attribute.

A further example is wherein the first index variable comprises the object attribute. A further example is wherein the first index variable further comprises the publish-subscribe object. A further example is wherein the second index variable comprises the subscribing process. A further example is wherein the evaluatable condition comprises a logic operation. A further example is wherein the evaluatable condition comprises an alias of a system condition.

Examples of the systems and methods may be encoded in a signal bearing medium, a computer readable medium such as a memory, programmed within a device such as one or more integrated circuits, or processed by a controller or a computer. If the methods are encoded in software, the software may reside in a memory resident to or interfaced to any other type of non-volatile or volatile memory interfaced, or resident to a communication device. The memory may include an ordered listing of executable instructions for implementing logical functions. A logical function may be implemented through digital circuitry, through source code, through analog circuitry, or through an analog source such as an analog electrical or optical signal. The software may be embodied in any computer-readable or signal bearing medium, for use by, or in connection with an instruction executable system, apparatus, or device. Such a system may include a computer-based system, a processor-containing system, a signal processor, or another system that may selectively fetch instructions from an instruction executable system, a non-transitory apparatus, or device that may also execute instructions. Some processors may comprise one or more dedicated processors to carry out one or more of the illustrated functions or acts. The processors may be under the control of a master processor. The processors may carry out one or more procedures in tandem and may execute different sets of instructions on different parts of the same process or different processes (*e.g*., parallel processing or co-processing).

A "computer-readable medium," "machine-readable medium," or "signal-bearing medium" may comprise any apparatus that contains, stores, communicates, or transports data or software for use by or in connection with an instruction executable system, apparatus, or device. The machine-readable medium may selectively be, but not limited to, an electronic, magnetic, optical, electromagnetic, infrared, or semiconductor system, apparatus, or device. A non-exhaustive list of exampled of machine-readable medium would include: an electrical connection having one or more tangible connections, a portable magnetic or optical disk, a volatile memory such as a Random Access Memory "RAM" (electronic), a Read-Only Memory "ROM" (electronic), an Erasable Programmed Read-Only Memory (EPROM or Flash memory) (electronic), or an optical fiber (optical).

While various embodiments of the invention have been described, it will be apparent to those of ordinary skill in the art that the invention is defined as set forth by the appended claims.

## Claims

1. A computer operating system programmed to service publish-subscribe interprocess communication events, comprising:
a processor (102) programmed to receive a subscription event (502) from a subscribing process (204), the subscription initiation event (502) comprising a content-filter message (410), indicating a condition of an object attribute (304) of an operating system publish-subscribe file (300) that determines when the subscribing process (204) is notified of a change to a value of the object attribute (304);
a memory (104, 106) configured to retain the content-filter message (410) and the associated subscribing process (204);
the processor (102) further programmed to evaluate the content-filter message (410) condition against an operating system published event (208) received from an operating system publishing process (202) and transmit to the subscribing process (204) a notification event (218) to notify the subscribing process (204) when an evaluation of the content-filter condition is satisfied and where the computer operating system is **characterized by**
the processor (102) being further configured to limit a number of times that content-filter message (410) condition is evaluated, wherein the subscribing process (204) identifies at said subscription initiation event a number of times that said content-filter is to be evaluated or applied.

2. The computer of claim 1, wherein the notification event (218) is configured to wake-up subscribing process (204) from a sleep state.

3. The computer of claim 1, wherein the processor (102) publishes to the subscribing process (204) additional data associated with the value of the object attribute (300) that changed.

4. The computer of claim 1, wherein the processor (102) publishes to the subscribing process (204) a portion of additional data associated to the value of the object attribute (300) that changed.

5. The computer of claim 1, wherein the content-filter message (410) comprises an object attribute (304), a threshold value for the object attribute, and an evaluative condition associated with the threshold value for the object attribute (304).

6. A computer-implemented method which causes a processor executing an operating system to execute a method for servicing publish-subscribe interprocess communication events, the method comprising:
receiving a subscription initiation event (502) from a subscribing process (204), the subscription initiation event comprising a content-filter(410), indicating a condition of an object attribute (304) of an operating system publish-subscribe file;
receiving from an operating system publisher (202) an operating system publication event (208) including a publish-subscribe object (302), the operating system publication event (208) received at a publisher application interface (210) in the computer system, the operating system publication event (208) including a change to an object attribute (304) contained within the publish-subscribe object (302);
evaluating the change to the object attribute (304) contained within the operating system publish-subscribe object (302) against the content filter (410); and
transmitting a notification event (218) to the subscribing process (204) when the evaluation of the content-filter is satisfied the method being **characterized by**
the processor (102) being further configured to limit a number of times that content-filter message (410) condition is evaluated, wherein the subscribing process (204) identifies at said subscription initiation event a number of times that said content-filter is to be evaluated or applied.

7. The method of claim 6, wherein the subscribing process (204) awakens in response to the notification event (218).

## Patentansprüche

1. Computerbetriebssystem, das zum Bedienen von interprozessualen Publikation-Abonnement-Kommunikationsereignissen programmiert ist und Folgendes umfasst:
einen Prozessor (102), der programmiert ist, ein Abonnementereignis (502) von einem Abonnementprozess (204) zu empfangen, wobei das Abonnementinitiierungsereignis (502) eine Inhaltsfilternachricht (410) umfasst, die eine Bedingung eines Objektattributs (304) einer Betriebssystem-Publikation-Abonnement-Datei (300) anzeigt, die bestimmt, wann der Abonnementprozess (204) über eine Änderung eines Wertes des Objektattributs (304) benachrichtigt wird;
einen Speicher (104, 106), der dazu ausgelegt ist, die Inhaltsfilternachricht (410) und den zugehörigen Abonnementprozess (204) zu verwahren;
wobei der Prozessor (102) ferner programmiert ist, die Inhaltsfilternachricht(410)-Bedingung anhand eines publizierten Betriebssystemereignisses (208), das von einem Betriebssystempublikationsprozess (202) empfangen wurde, zu beurteilen und ein Benachrichtigungsereignis (218) zum Abonnementprozess (204) zu übertragen, um den Abonnementprozess (204) zu benachrichtigen, wenn eine Beurteilung der Inhaltsfilterbedingung erfüllt ist, und wo das Computerbetriebssystem **dadurch gekennzeichnet ist, dass**
der Prozessor (102) ferner dazu ausgelegt ist, eine Häufigkeit, mit der eine Inhaltsfilternachricht(410)-Bedingung beurteilt wird, zu begrenzen, wobei der Abonnementprozess (204) bei dem Abonnementinitiierungsereignis eine Häufigkeit identifiziert, mit der der Inhaltsfilter zu beurteilen oder anzuwenden ist.

2. Computer nach Anspruch 1, wobei das Benachrichtigungsereignis (218) dazu ausgelegt ist, den Abonnementprozess (204) aus einem Ruhezustand aufzuwecken.

3. Computer nach Anspruch 1, wobei der Prozessor (102) zusätzliche Daten, die mit dem Wert des Objektattributs (300), der sich geändert hat, verknüpft ist, zum Abonnementprozess (204) publiziert.

4. Computer nach Anspruch 1, wobei der Prozessor (102) einen Abschnitt von zusätzlichen Daten, die mit dem Wert des Objektattributs (300), der sich geändert hat, verknüpft ist, zum Abonnementprozess (204) publiziert.

5. Computer nach Anspruch 1, wobei die Inhaltsfilternachricht (410) ein Objektattribut (304), einen Schwellwert für das Objektattribut und eine Beurteilungsbedingung, die mit dem Schwellwert des Objektattributs (304) verknüpft ist, umfasst.

6. Computerimplementiertes Verfahren, das einen Prozessor, der ein Betriebssystem ausführt, veranlasst, ein Verfahren zum Bedienen von interprozessualen Publikation-Abonnement-Kommunikationsereignissen auszuführen, wobei das Verfahren Folgendes umfasst:
Empfangen eines Abonnementinitiierungsereignisses (502) von einem Abonnementprozess (204), wobei das Abonnementinitiierungsereignis einen Inhaltsfilter (410) umfasst, der eine Bedingung eines Objektattributs (304) einer Betriebssystem-Publikation-Abonnement-Datei anzeigt;
Empfangen eines Betriebssystempublikationsereignisses (208), das ein Publikation-Abonnement-Objekt (302) beinhaltet, von einem Betriebssystemveröffentlicher (202), wobei das Betriebssystempublikationsereignis (208) an einer Veröffentlicheranwendungsschnittstelle (210) im Computersystem empfangen wird, wobei das Betriebssystempublikationsereignis (208) eine Änderung an einem Objektattribut (304) beinhaltet, die im Publikation-Abonnement-Objekt (302) enthalten ist;
Beurteilen der Änderung am Objektattribut (304), die im Betriebssystem-Publikation-Abonnement-Objekt (302) enthalten ist, anhand des Inhaltsfilters (410) und
Übertragen eines Benachrichtigungsereignisses (218) zum Abonnementprozess (204), wenn die Beurteilung des Inhaltsfilters erfüllt ist, wobei das Verfahren **dadurch gekennzeichnet ist, dass**
der Prozessor (102) ferner dazu ausgelegt ist, eine Häufigkeit, mit der eine Inhaltsfilternachricht(410)-Bedingung beurteilt wird, zu begrenzen, wobei der Abonnementprozess (204) bei dem Abonnementinitiierungsereignis eine Häufigkeit identifiziert, mit der der Inhaltsfilter zu beurteilen oder anzuwenden ist.

7. Verfahren nach Anspruch 6, wobei der Abonnementprozess (204) in Reaktion auf das Benachrichtigungsereignis (218) aufwacht.

## Revendications

1. Système d'exploitation d'ordinateur programmé pour prendre en charge des événements de communication interprocessus de publication-abonnement, comprenant :
un processeur (102) programmé pour recevoir un événement d'abonnement (502) en provenance d'un processus d'abonnement (204), l'événement d'initiation d'abonnement (502) comprenant un message de filtre de contenu (410), indiquant une condition d'un attribut d'objet (304) d'un fichier de publication-abonnement de système d'exploitation (300) qui détermine quand le processus d'abonnement (204) est notifié d'un changement d'une valeur de l'attribut d'objet (304) ;
une mémoire (104, 106) configurée pour conserver le message de filtre de contenu (410) et le processus d'abonnement associé (204) ;
le processeur (102) en outre programmé pour évaluer la condition du message de filtre de contenu (410) par rapport à un événement publié de système d'exploitation (208) reçu en provenance d'un processus de publication de système d'exploitation (202) et transmettre au processus d'abonnement (204) un événement de notification (218) pour notifier au processus d'abonnement (204) quand une évaluation de la condition de filtre de contenu est satisfaite et où le système d'exploitation d'ordinateur est **caractérisé par** le processeur (102) qui est en outre configuré pour limiter un nombre de fois qu'une condition de message de filtre de contenu (410) est évaluée, dans lequel le processus d'abonnement (204) identifie lors dudit événement d'initiation d'abonnement un nombre de fois que ledit filtre de contenu doit être évalué ou appliqué.

2. Ordinateur selon la revendication 1, dans lequel l'événement de notification (218) est configuré pour réveiller un processus d'abonnement (204) d'un état de sommeil.

3. Ordinateur selon la revendication 1, dans lequel le processeur (102) publie au processus d'abonnement (204) des données additionnelles associées à la valeur de l'attribut d'objet (300) qui a changé.

4. Ordinateur selon la revendication 1, dans lequel le processeur (102) publie au processus d'abonnement (204) une partie de données additionnelles associées à la valeur de l'attribut d'objet (300) qui a changé.

5. Ordinateur selon la revendication 1, dans lequel le message de filtre de contenu (410) comprend un attribut d'objet (304), une valeur de seuil pour l'attribut d'objet, et une condition évaluative associée à la valeur de seuil pour l'attribut d'objet (304).

6. Procédé mis en œuvre par ordinateur qui amène un processeur exécutant un système d'exploitation à exécuter un procédé pour prendre en charge des événements de communication interprocessus de publication-abonnement, le procédé comprenant :
la réception d'un événement d'initiation d'abonnement (502) en provenance d'un processus d'abonnement (204), l'événement d'initiation d'abonnement comprenant un filtre de contenu (410), indiquant une condition d'un attribut d'objet (304) d'un fichier de publication-abonnement de système d'exploitation ;
la réception en provenance d'un publicateur de système d'exploitation (202) d'un événement de publication de système d'exploitation (208) incluant un objet de publication-abonnement (302), l'événement de publication de système d'exploitation (208) reçu au niveau d'une interface d'application de publicateur (210) dans le système d'ordinateur, l'événement de publication de système d'exploitation (208) incluant un changement d'un attribut d'objet (304) contenu à l'intérieur de l'objet de publication-abonnement (302) ;
l'évaluation du changement de l'attribut d'objet (304) contenu à l'intérieur de l'objet de publication-abonnement de système d'exploitation (302) par rapport au filtre de contenu (410) ; et
la transmission d'un événement de notification (218) au processus d'abonnement (204) quand l'évaluation du filtre de contenu est satisfaite, le procédé étant **caractérisé par** le processeur (102) qui est en outre configuré pour limiter un nombre de fois qu'une condition de message de filtre de contenu (410) est évaluée, dans lequel le processus d'abonnement (204) identifie lors dudit événement d'initiation d'abonnement un nombre de fois que ledit filtre de contenu doit être évalué ou appliqué.

7. Procédé selon la revendication 6, dans lequel le processus d'abonnement (204) se réveille en réponse à l'événement de notification (218).
